# EUROPÄISCHE PATENTSCHRIFT

(11) **EP 2 695 728 B1**
(45) Veröffentlichungstag und Bekanntmachung des Hinweises auf die Patenterteilung: **04.05.2016**
(21) Anmeldenummer: 13179265.7
(22) Anmeldetag: 05.08.2013
(51) Int. Cl.: B29D 30/00, B29C 33/72, B24C 1/00

(54) **Vorrichtung zum Reinigen von Vulkanisationsformen**
Device for cleaning vulcanisation moulds
Dispositif destinés au nettoyage de moules de vulcanisation

(30) Priorität: 07.08.2012 DE 102012107225
(43) Veröffentlichungstag der Anmeldung: 12.02.2014
(73) Patentinhaber: enotech AG, 64807 Dieburg (DE)
(72) Erfinder: Peschke, Winfried, 64380 Roßdorf-Gundernhausen (DE)
(74) Vertreter: Graf Lambsdorff, Matthias

(56) Entgegenhaltungen:
- EP-A2- 0 740 989
- US-A- 5 932 026

## Beschreibung

Die vorliegende Erfindung betrifft eine Vorrichtung und ein Verfahren zum Reinigen von Vulkanisationsformen mit Trockeneis gemäß den unabhängigen Patentansprüchen.

Die Herstellung von Autoreifen erfolgt durch Vulkanisation in Heiz- oder Vulkanisationspressen. Dabei wird ein Reifenrohling in eine geeignete Vulkanisationsform eingesetzt und unter Einwirkung von Wärme sowie Druck vulkanisiert. Die Vulkanisationsformen bestehen aus Formsegmenten, welche gemeinsam die radiale äußere Oberfläche des Reifens sowie den Laufstreifen, den Schulterbereich, die Seitenwände und den Wulstbereich formen. Die Formsegmente der Vulkanisationsformen sind aus Metall gefertigt, üblicherweise aus Stahl oder Aluminium und können beispielsweise durch Gießverfahren oder durch direkte Fräsverfahren aus Vollmaterialien hergestellt werden. Als weitere Besonderheit weisen Vulkanisationsformen Entlüftungsventile auf, die sich von der Innenwand der Vulkanisationsform nach außen erstrecken und die dazu dienen, beim Vulkanisationsprozess entstandene Lufteinschlüsse abzuführen. Diese Ventile können im einfachsten Fall durch Löcher oder Durchführungen gegeben sein.

Eine Vulkanisationsform muss in regelmäßigen Abständen von Rückständen gereinigt werden. Hierfür sind im Laufe der Zeit verschiedenartige Verfahren entwickelt worden. Neben einem Sandstrahl-Reinigungsverfahren, einem chemischen Reinigungsverfahren und einem Laserstrahl-Reinigungsverfahren hat sich hier insbesondere die Reinigung mit Trockeneis-Strahlen als besonders vorteilhaft erwiesen, da im Gegensatz zum bekannten Sandstrahlen im wesentlichen keine Beschädigung der Oberfläche der Vulkanisationsform erfolgt, das Trockeneis sich nach dem Auftreffen durch Sublimation verflüchtigt und außerdem das Trockeneis-Reinigungsverfahren eine besonders effiziente Reinigung einer Vulkanisationsform ermöglicht. Die bisher im Stand der Technik vorgeschlagenen Reinigungsvorrichtungen sind jedoch noch in mancher Hinsicht nachteilig. So hat sich beispielsweise gezeigt, dass es mit konventionellen Trockeneis-Reinigungsvorrichtungen schwierig bis unmöglich ist, bestimmte schwer zugängliche Bereiche in der Oberfläche der Vulkanisationsform mit dem Trockeneis-Strahl zu erreichen, so dass mitunter bestimmte Vulkanisationsformen nur unzureichend gereinigt werden.

Diesbezüglich zeigt US 592 026 eine mobile Vorrichtung, welche dafür vorgesehen ist, Vulkanisationsformen mit Hilfe eines Roboterangetribenen Trockeneis-Strahls zu Reinigen.

Es ist demgemäß Aufgabe der vorliegenden Erfindung, eine Vorrichtung und ein Verfahren zum Reinigen von Vulkanisationsformen für Reifen mittels Trockeneis anzugeben, mit welchen verbesserte Reinigungsergebnisse erzielbar sind. Insbesondere ist es Aufgabe der Vorliegenden Erfindung, eine solche Vorrichtung derart auszugestalten, dass mit ihr eine Vulkanisationsform für Reifen vollständig, d. h. auch an schwer zugänglichen Stellen, gereinigt werden kann.

Diese Aufgabe wird mit einer Vorrichtung gemäß den Merkmalen des unabhängigen Patent anspruchs 1 und einem Verfahren gemäß den Merkmalen des nebengeordneten Patentanspruchs gelöst. Vorteilhafte Ausgestaltungen und Weiterbildungen sind Gegenstand von Unteransprüchen.

Im folgenden werden Ausführungsformen von erfindungsgemäßen Reinigungsvorrichtungen im wesentlichen anhand von zwei Aspekten beschrieben. Es sei darauf hingewiesen, dass jedes Merkmal, welches nur hinsichtlich nur eines dieser Aspekte beschrieben wurde, auch bezüglich des jeweils anderen dieser Aspekte Anwendung finden kann.

Die erfindungsgemäße Vorrichtung zum Reinigen von Vulkanisationsformen für Reifen mittels Trockeneis gemäß einem ersten Aspekt weist einen Haltearm, einen Haltekörper, welcher mit dem Haltearm verbunden ist, und eine erste Sprühdüse auf, welche mit dem Haltekörper verbunden ist und welche entlang von drei Achsen eines durch den Haltekörper definierten x-y-z-Koordinatensystems linear bewegbar ist.

Gemäß einer Ausführungsform der Vorrichtung gemäß dem ersten Aspekt weist die Vorrichtung ferner eine erste Reinigungseinheit auf, mit welcher die erste Sprühdüse derart verbunden ist, dass sie entlang einer Achse, insbesondere einer z-Achse eines durch den Haltekörper definierten x-y-z-Koordinatensystems, relativ zu der ersten Reinigungseinheit linear bewegbar ist.

Gemäß einer Ausführungsform der Vorrichtung gemäß dem ersten Aspekt weist die Vorrichtung ferner eine erste Schiene auf, an welcher die erste Sprühdüse oder die erste Reinigungseinheit linear bewegbar entlang der ersten Schiene angebracht ist. Die Vorrichtung kann ferner eine zweite Schiene und eine dazu parallele dritte Schiene aufweisen, wobei die erste Schiene derart an der zweiten und der dritten Schiene angebracht ist, dass sie entlang der Richtung der zweiten und dritten Schiene linear bewegbar ist.

Gemäß einer Ausführungsform der Vorrichtung gemäß dem ersten Aspekt ist die erste Sprühdüse um eine Mittelachse des Haltekörpers drehbar.

Gemäß einer Ausführungsform der Vorrichtung gemäß dem ersten Aspekt ist die erste Sprühdüse um eine zur Achse der Sprühdüse senkrechte Achse verschwenkbar.

Gemäß einer Ausführungsform der Vorrichtung gemäß dem ersten Aspekt enthält die Vorrichtung eine zweite Sprühdüse, die in ebensolcher Weise wie die erste Sprühdüse ausgebildet sein kann. Dabei kann vorgesehen sein, dass die zweite Sprühdüse zumindest entlang einer Richtung des x-y-z-Koordinatensystems, beispielsweise der z-Richtung, unabhängig von der Bewegung der ersten Sprühdüse bewegt werden kann. Insbesondere kann die zweite Sprühdüse auch entlang einer zweiten Richtung, beispielsweise der Y-Richtung, unabhängig von der Bewegung der ersten Sprühdüse bewegt werden kann. Die Bewegung entlang der dritten Richtung, also beispielsweise der x-Richtung, kann dann beispielsweise zwischen der ersten und der zweiten Sprühdüse in einer koordinierten Weise ablaufen, wofür weiter unten ein konkretes Ausführungsbeispiel gezeigt werden wird. Es ist jedoch ohne Weiteres denkbar, dass auch bezüglich der dritten Richtung die beiden Sprühdüsen unabhängig voneinander bewegbar sind, so dass in diesem Fall die Sprühdüsen vollständig unabhängig voneinander bewegbar sind. Sämtliche Bewegungen können motorgesteuert erfolgen, insbesondere unter Verwendung von Druckluftmotoren.

Die zweite Sprühdüse kann insbesondere auch an einer zweiten Reinigungseinheit gehaltert sein. Des Weiteren kann die Vorrichtung eine vierte Schiene aufweisen, an welcher die zweite Sprühdüse oder die zweite Reinigungseinheit linear bewegbar entlang der vierten Schiene angebracht ist. Diese vierte Schiene kann ebenso wie die erste Schiene derart an der zweiten und der dritten Schiene angebracht sein, dass sie entlang der Richtung der zweiten und dritten Schiene linear bewegbar ist. Die vierte Schiene kann eine mit der ersten Schiene koordinierte Bewegung ausführen, wie weiter unten anhand eines Ausführungsbeispiels noch genauer zu sehen sein wird.

Die erfindungsgemäße Vorrichtung zum Reinigen von Vulkanisationsformen für Reifen mittels Trockeneis gemäß einem zweiten Aspekt umfasst einen Haltearm, einen Haltekörper, welcher mit dem Haltearm verbunden ist, eine erste Reinigungseinheit, welche mit dem Haltekörper verbunden ist, eine erste Sprühdüse, welche mit der ersten Reinigungseinheit verbunden ist, eine zweite Reinigungseinheit, welche mit dem Haltekörper verbunden ist, und eine zweite Sprühdüse, welche mit der Zweiten Reinigungseinheit verbunden ist.

Das Vorhandensein zweier Sprühdüsen ermöglicht zunächst einmal eine erhebliche Verkürzung der Zeitdauer für die Reinigung einer Vulkanisationsform gegenüber Reinigungsvorrichtungen mit nur einer Sprühdüse. Das Vorhandensein von zwei Sprühdüsen kann aber auch dahingehend genutzt werden, dass bestimmte, schwer zugängliche Bereiche der Innenwand einer Vulkanisationsform von beiden Sprühdüsen mit dem Trockeneis-Strahl beaufschlagt werden, wobei insbesondere vorgesehen sein kann, dass die beiden Sprühdüsen den betreffenden Bereich aus unterschiedlichen Richtungen bestrahlen, so dass der betreffende Bereich besser gereinigt werden kann. Dabei kann beispielsweise auch vorgesehen sein, dass schwer zugängliche Bereiche oder Ventile, insbesondere solche die schwer zugänglich sind, von beiden Sprühdüsen mit dem Trockeneis-Strahl beaufschlagt werden.

Gemäß einer Ausführungsform der Vorrichtung nach dem zweiten Aspekt kann durch den Haltekörper ein x-y-z-Koordinatensystem definiert sein und die beiden Sprühdüsen können jeweils entlang der drei Achsen des Koordinatensystems linear bewegbar sein. Dabei kann insbesondere vorgesehen sein, dass beide Sprühdüsen jeweils derart an ihrer jeweiligen Reinigungseinheit gehaltert sind, dass sie relativ zu dieser entlang einer z-Achse des x-y-z-Koordinatensystems linear bewegbar sind.

Gemäß einer Ausführungsform der Vorrichtung gemäß dem zweiten Aspekt sind die beiden Reinigungseinheiten auf eine Weise mit dem Haltekörper verbunden, dass sie mindestens hinsichtlich einer der drei Richtungen des x-y-z-Koordinatensystems, etwa der z-Richtung, unabhängig voneinander bewegbar sind. Insbesondere kann vorgesehen sein, dass sie bezüglich zwei Richtungen, etwa der z- und y-Rickitung unabhängig voneinander bewegbar sind, bezüglich der x-Richtung die Bewegung jedoch in bestimmter Weise koordiniert ist, wie noch zu sehen sein wird. Es kann jedoch auch vorgesehen sein, dass die Bewegung hinsichtlich aller drei Richtungen unabhängig voneinander erfolgt.

Gemäß einer Ausführungsform der Vorrichtung gemäß dem zweiten Aspekt weist der Haltekörper einen Ring, insbesondere einen Drehring, auf, wie weiter unten noch näher ausgeführt werden wird.

Gemäß einer Aüsführungsform der Vorrichtung gemäß dem zweiten Aspekt sind die erste Reinigungseinheit und die zweite Reinigungseinheit derart miteinander und mit dem Haltekörper verbunden, dass sie eine koordinierte Drehbewegung um eine Hauptachse des Haltekörpers ausführen können, wobei insbesondere die koordinierte Drehbewegung in einer x-y-Ebene eines x-y-z-Koordinatensystems stattfindet. Insbesondere kann dabei der Haltekörper einen Ring wie einen Drehring aufweisen und die durch den Drehring definierte Ebene kann die x-y-Ebene des x-y-z-Koordinatensystems bilden. Die Hauptachse des Drehrings kann die Symmetrieachse des Drehrings sein.

Die Vorrichtung umfasst ferner eine erste Schiene, an welcher die erste Reinigungseinheit linear entlang der ersten Schiene bewegbar angebracht ist, und eine zweite Schiene, an welcher die zweite Reinigungseinheit linear entlang der zweiten Schiene bewegbar angebracht ist, wobei die erste Schiene und die zweite Schiene sich jeweils entlang einer x-Achse eines x-y-z-Koordinätensystems erstrecken.

Gemäß einer Ausführungsform der Vorrichtung gemäß dem zweiten Aspekt umfasst die Vorrichtung ferner eine dritte Schiene und eine dazu parallele vierte Schiene, wobei die erste Schiene und die zweite Schiene jeweils derart an der dritten und der vierten Schiene angebracht sind, dass sie entlang der Richtung der dritten und vierten Schiene linear bewegbar sind, wobei die dritte Schiene und die vierte Schiene sich jeweils entlang einer y-Achse des x-y-z-Koordinatensystems erstrecken und ortsfest an dem Haltekörper angebracht sind.

Gemäß einer Ausführungsform der Vorrichtung gemäß dem zweiten Aspekt kann die erste Sprühdüse an der ersten Reinigungseinheit verschwenkbar angebracht sein und die zweite Sprühdüse kann an der zweiten Reinigungseinheit verschwenkbar angebracht sein, wobei insbesondere die Verschwenkbarkeit jeder der beiden Sprühdüsen um eine zur Achse der Sprühdüse senkrechte Achse erfolgt, insbesondere um eine z-Achse eines durch den Haltekörper definierten x-y-z-Koordinatensystems.

Gemäß einer Ausführungsform der Vorrichtung gemäß dem ersten oder dem zweiten Aspekt ist der Haltearm als ein Gelenkarm, insbesondere als ein sogenannter SCARA-Arm (Selective Compliance Assembly Robot Arm), ausgebindet.

Gemäß einer Ausführungsform der Vorrichtung gemäß dem ersten oder dem zweiten Aspekt weist die Vorrichtung ferner eine Überwachungseinrichtung zur Überwachung der Position und/oder Ausrichtung der ersten und der zweiten Sprühdüse auf, wobei die Überwachungseinrichtung Sensoren aufweisen kann, mit welchen die Bewegungen der ersten und zweiten Sprühdüse und/oder der ersten und der zweiten Reinigungseinheit detektierbar sind. Die Sensoren können dabei auf verschiedene Weise ausgestaltet sein. Es können zum einen in den Antriebselementen der Sprühdüsen, der Reinigungseinheiten oder der anderen bewegten Glieder Drehgeber und Wegaufnehmer enthalten sein, mittels derer festgestellt werden kann, welchen Weg ein bestimmtes Element oder Glied zurückgelegt hat. Die Sensoren können alternativ oder zusätzlich dazu auch als berührungslos messende Sensoren ausgebildet sein, die beispielsweise an bestimmten Positionen des Haltekörpers befestigt sind und als Abstandsmess-Sensoren auf Laser- oder Ultraschallbasis ausgebildet sein.

Gemäß einer weiteren Ausführungsform der Vorrichtung gemäß dem ersten oder dem zweiten Aspekt kann mit der Überwachungseinrichtung eine Regelungseinrichtung verbunden sein, welche eingerichtet sein kann, um die Position und/oder Ausrichtung der ersten und der zweiten Sprühdüse und/oder der ersten und der zweiten Reinigungseinheit aufgrund vorgegebener Sollwerte zu regeln. Die Regelungsvorrichtung kann beispielsweise auch derart programmierbar ausgestaltet sein, dass benutzerseitig eingebbar nur ein bestimmter ausgewählter Bereich einer Innenwand einer Vulkanisationsform, beispielsweise ein Ventil oder ein Schwer zugänglicher Bereich, gereinigt werden soll. Die Regelungseinrichtung kann dementsprechend Sollwerte an eine Antriebssteuerung der zu bewegenden Elemente und Glieder ausgeben und erhält, in regelmäßigen Abständen oder kontinuierlich Infomationssignale von der Überwachungseinrichtung bezüglich der Position und/oder Ausrichtung von einer der Sprühdüsen und/oder einer der ersten und zweiten Reinigungseinheiten.

Gemäß einer Ausführungsform der Vorrichtung gemäß dem ersten oder dem zweiten Aspekt ist der Haltekörper mittels eines Drehgelenks mit dem Haltearm verbunden, so dass der Haltekörper um eine Dreh- oder zentrale Achse des Drehgelenks drehbar angelenkt ist. Dies ist insbesondere deshalb von Vorteil, da hierdurch der Haltekörper und somit die an ihm befestigten Elemente, wie Reinigungseinheiten oder Sprühdüsen, an die Vulkanisationsform von oben oder von unten und hierbei auch von verschiedenen Richtungen und gegebenenfalls auch unter schrägen Winkeln angenähert werden kann.

Gemäß einer Ausführungsform der Vorrichtung gemäß dem ersten oder dem zweiten Aspekt umfasst die Vorrichtung Antriebseinheiten zum Antrieb der Bewegung der Reinigungseinheiten und Sprühdüsen, wobei jede der Antriebseinheiten einen Druckluftmotor enthält. Vorzugsweise sind auch in den weiteren Antriebseinheiten der weiteren bewegbaren Elemente Druckluftmotoren enthalten.

Gemäß einer Ausführungsform der Vorrichtung gemäß dem ersten oder dem zweiten Aspekt umfasst die Vorrichtung ferner einen Reinigungswagen, an welchem der Haltearm schwenkbar angebracht ist und welcher einen ersten Bereich aufweiset, in welchen der Haltearm mit dem Haltekörper eingeschwenkt und darin arretiert werden kann. Der Reinigungswagen kann des Weiteren einen zweiten Bereich, aufweisen, in welchem eine Trockeneis-Strahlanlage angeordnet ist.

Ein erfindungsgemäßes Verfahren zum Reinigen von Vulkanisationsformen für Reifen gemäß einem dritten Aspekt umfasst die Schritte: Bereitstellen einer Vulkanisationsform, Ausrichten einer ersten Sprühdüse auf eine erste Reinigungsposition und/oder einer zweiten Sprühdüse auf eine zweite Reinigungsposition, Zuführen von Trockeneis zu der ersten und/oder der zweiten Sprühdüse, und programmgesteuertes Bewegen der ersten Sprühdüse und/oder der zweiten Sprühdüse derart, dass ein vorgegebener Bereich einer Innenwand der Vulkanisationsform durch einen oder zwei Trockeneis-Strahlen gereinigt wird.

Gemäß einer Ausführungsform des Verfahrens kann die Vulkanisationsform in einem Zustand bereitgestellt werden, in welchem sie in eine Heizpresse eingebaut ist. Dies ist insbesondere deshalb vorteilhaft, da die Vulkanisationsform in diesem Zustand mittels der Heizpresse auf eine vorgegebene Temperatur, insbesondere eine Temperatur größer als 50°C, insbesondere größer als 100°C, insbesondere größer als 150°C gebracht werden kann, so dass der Reinigungsvorgang thermisch, unterstützt werden kann.

Gemäß einer Ausführungsform des Verfahrens kann die Vulkanisationsform in einem aus der Heizpresse ausgebauten Zustand bereitgestellt werden und diesem Zustand gereinigt werden.

Gemäß einer Ausführungsform umfasst das Verfahren den weiteren Schritt: Überwachen der Position und/öder der Ausrichtung der ersten und/oder der zweiten Sprühdüse und gegebenenfalls Riegeln der Position und/oder Ausrichtung der ersten und/oder der zweiten Sprühdüse aufgrund vorgegebener Sollwerte.

Gemäß einer Ausführungsform wird lediglich ein Teilbereich der Innenwand, insbesondere ein Ventil oder ein schwer zugänglicher Bereich der Innenwand, gereinigt. Das Verfahren umfasst dann gegebenenfalls den weiteren Schritt: Eingeben von Koordinationsdaten, welche den Bereich kennzeichnen, in eine Steuerungseinrichtung.

Im Folgenden werden Ausführungsbeispiele anhand der Zeichnungen näher erläutert. Es zeigen:
Fig. 1 eine schematische perspektivische Ansicht auf eine Reinigungsvorrichtung gemäß einem ersten Aspekt.
Fig. 2 eine schematische Draufsicht auf eine Reinigungsvorrichtung gemäß einem zweiten Aspekt.
Fig. 3 eine perspektivische Ansicht eines Reinigungskopfes einer Reinigungsvorrichtung gemäß einer Ausführungsform.
Fig. 4 eine weitere perspektivische Ansicht des an einem Gelenkarm angebrachten Reinigungskopfes der Fig.1.
Fig. 5 eine perspektivische Ansicht einer Reinigungseinheit gemäß einer Ausführungsform.
Fig. 6 eine perspektivische Ansicht eines Haltearms gemäß einer Ausführungsform.
Fig. 7 eine perspektivische Ansicht eines Reinigungswagens einer Reinigungsvorrichtung gemäß einer Ausführungsform.
Fig. 8 ein Flussdiagramm eines Verfahrens zum Reinigen von Vulkanisationsformen für Reifen mittels Trockeneis gemäß einem dritten Aspekt.

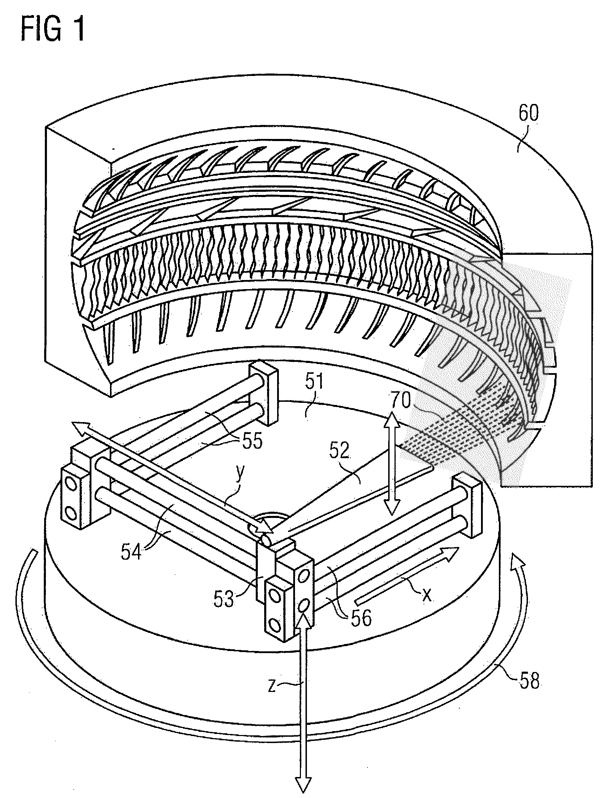

Die Fig.1 zeigt eine schematische perspektivische Ansicht einer Reinigungsvorrichtung gemäß dem ersten Aspekt. Die Reinigungsvorrichtung 50 soll dazu eingesetzt werden, eine Vulkanisationsform 60 mit einem Trockeneis-Strahl 70 zu reinigen. Die Reinigungsform 50 enthält zu diesem Zweck einen Haltekörper 51 und eine Sprühdüse 52, welche mit dem Haltekörper 51 verbunden ist. Der Haltekörper 51 kann an einem nicht dargestellten Haltearm befestigt sein. Der Haltekörper 51 kann, wie dargestellt, die Form einer kreisrunden Scheibe aufweisen und durch ihn kann solchermaßen auch ein x-y-z-Koordinatensystem definiert sein, in welchem die z-Achse parallel zu der Mittelachse des Haltekörpers 51 verläuft, und die x-y-Ebene eine Ebene parallel zur Hauptoberfläche des Haltekörpers 51 bildet. Die Sprühdüse 52 ist entlang von drei Achsen eines x-y-z-Koordinatensystems linear bewegbar. Dabei kann vorgesehen sein, dass die Sprühdüse 52 an einer Reinigungseinheit 53 derart gehaltert ist, dass sie relativ zu der Reinigungseinheit 53 eine Bewegung in z-Richtung, also senkrecht zu der Hauptebene des Haltekörpers 51 ausführen kann. Ferner kann vorgesehen sein, dass die Sprühdüse 52 an einer ersten Schiene 54 derart gehaltert ist, dass sie entlang der ersten Schiene 54 eine lineare Bewegung in y-Richtung ausführen kann. Des weiteren kann die erste Schiene 54 so zwischen einer zweiten Schiene 55 und einer dazu parallelen dritten Schiene 56 befestigt sein, dass sie eine lineare Bewegung entlang der zweiten und dritten Schiene, also in x-Richtung ausführen kann. Zusätzlich kann die Sprühdüse 52 um eine zur y-Achse parallele und durch die Längsachse der Sprühdüse 52 hindurchgehende Achse verschwenkbar ausgeführt sein, was mit der Bezugsziffer 57 angedeutet ist. Der gesamte Haltekörper 51 kann zudem um seine Mittelachse drehbar ausgeführt sein, was durch die Bezugsziffer 58 angedeutet ist. Mittels dieser Bewegungs-Freiheitsgrade kann die Vulkanisationsform 60 auch an schwer zugänglichen Stellen sehr gut gereinigt werden.

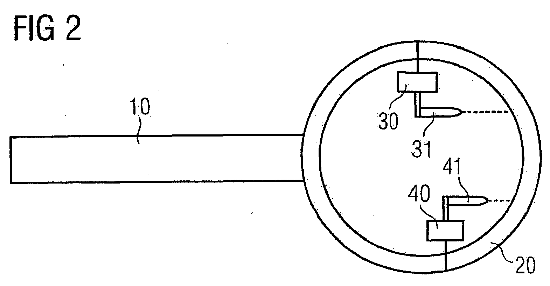

Die Fig. 2 zeigt eine schematische Draufsicht einer Reinigungsvorrichtung gemäß dem zweiten Aspekt. Die Reinigungsvorrichtung 100 umfasst einen Haltearm 10, einen Haltekörper 20, welcher mit dem Haltearm 10 verbunden ist, eine erste Reinigungseinheit 30, welche mit dem Haltekörper 20 verbunden ist, eine erste Sprühdüse 31, welche mit der ersten Reinigungseinheit 30 verbunden ist, eine zweite Reinigungseinheit 40, welche mit dem Haltekörper 20 verbunden ist, und eine zweite Sprühdüse 41, welche mit der zweiten Reinigungseinheit 40 verbunden ist.

Der Haltekörper 20 wird zusammen mit den daran befestigten Elementen im Folgenden auch als Reinigungskopf bezeichnet. Der Haltekörper 20 kann, wie dargestellt, einen Ring, insbesondere einen Drehring, aufweisen, an welchem die Reinigungseinheiten 30 und 40 in einer noch darzustellenden Weise beweglich angebracht sein können. Durch den Haltekörper 20 kann ein x-y-z-Koordinatensystem definiert werden, wobei die von dem Drehring aufgespannte Ebene die x-y-Ebene definiert und die Senkrechte dazu die z-Achse definiert. Die Reinigungseinheiten 30 und 40 und die daran angebrachten Sprühdüsen 31 und 41 können innerhalb der x-y-Ebene bewegbar gehaltert sein und die Sprühdüsen 31 und 41 können zusätzlich derart an der ersten Reinigungseinheit 30 bzw. der zweiten Reinigungseinheit 40 angebracht sein, dass sie in z-Richtung linear bewegbar sind. Aus diesem Grund werden nachfolgend die Reinigungseinheit 30 und 40 nachfolgend auch als z-Achs-Einheiten bezeichnet.

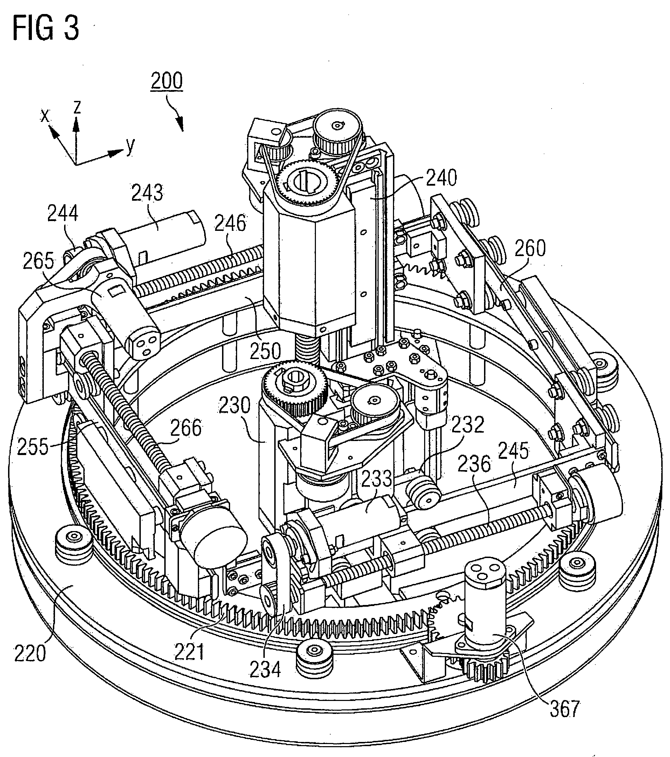

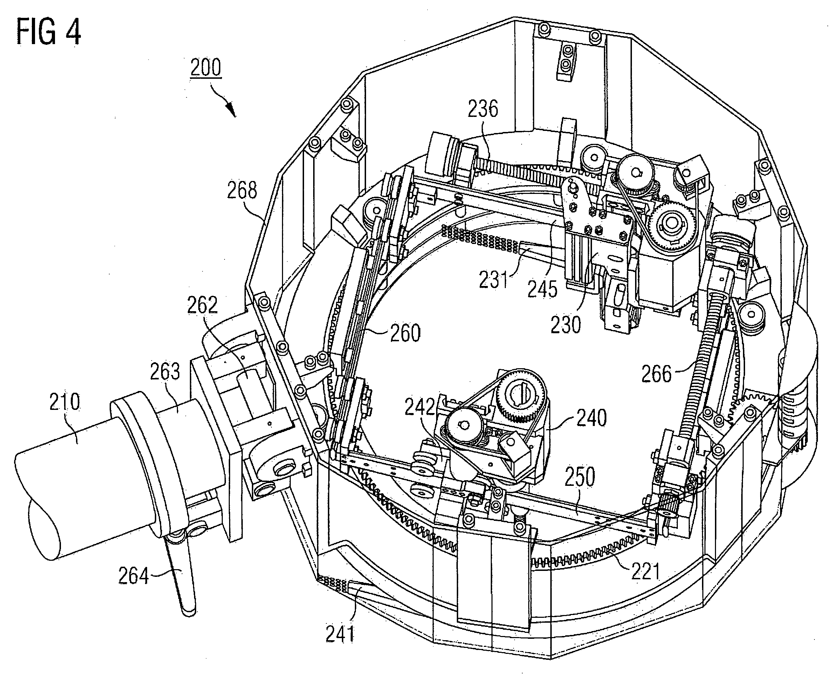

Die Figuren 3 und 4 zeigen jeweils perspektivische Ansichten eines Reinigungskopfes 200, der im Wesentlichen aus einem Haltekörper 220, einer ersten Reinigungseinheit 230, einer daran angebrachten ersten Sprühdüse 231, einer zweiten Reinigungseinheit 240, einer daran angebrachten zweiten Sprühdüse 241, einer ersten Schiene 245, einer zweiten Schiene 250, einer dritten Schiene 255, und einer vierten Schiene 260 aufgebaut ist. Der an dem Reinigungskopf 200 angebrachte Haltearm 210 und die Sprühdüsen 231 und 241 sind nur in Fig. 3 dargestellt.

Jede der beiden Reinigungseinheiten 230 und 240 kann auf einem Schlitten befestigt sein und die beiden Schlitten können mittels eines Schienensystems bewegt werden, welches aus zwei beweglichen Schienen 245 und 250 und zwei festen Schienen 255 und 260 aufgebaut sein kann. Die erste Reinigungseinheit 230 kann an einem ersten Schlitten 232 befestigt sein, welcher nur in Fig.3 sichtbar und bezeichnet ist und welcher mittels Führungsrollen an der ersten Schiene 245 linear beweglich entlang der Schiene befestigt sein kann. In eben solcher Weise kann die zweite Reinigungseinheit 240 an einem zweiten Schlitten 242 befestigt sein, welcher nur in Fig.4 sichtbar und bezeichnet ist und welcher ebenfalls mittels Führungsrollen an der zweiten beweglichen Schiene 250 linear beweglich entlang der Schiene befestigt sein kann. Die beiden Schlitten 232 und 242 können sich in y-Richtung bewegen. Jeder der beiden Schlitten 232 und 242 kann über einen Druckluftmotor 233 bzw. 243 angetrieben werden, wobei das Drehmoment dieses Motors über einen Zahnriementrieb 234 bzw. 244 auf eine Gewindespindel 236 bzw. 246 übertragen werden kann und eine entsprechende Gewindespindelmutter das auftretende Drehmoment in eine gerade gerichtete Bewegung in Richtung der y-Achse übertragen kann. Zusätzlich kann eine Überwachung der Bewegung in y-Richtung durch eine Drehgeber-Einheit übernommen werden, die am Ende der Gewindespindel angebracht sein kann. Die beiden Schlitten 232 und 242 mit den jeweils daran angebrachten Reinigungseinheiten 230 und 240 lassen sich somit unabhängig voneinander in ihrem jeweiligen Bewegungsspielraum frei verfahren und es können somit jederzeit zwei verschiedene Reinigungspositionen gleichzeitig mittels der Sprühdüsen 231 und 241 angepeilt werden.

Diese beiden y-Achs-Systeme mit ihren z-Achs-Einheiten lassen sich nun zentrisch zueinander auf der x-Achse des gesamten Systems bewegen. Hierfür kann ein weiterer Druckluftmotor 265 bereitgestellt sein, dessen Drehmoment auch hier mittels eines Zahnriemenradtriebes übertragen werden kann. Das Drehmoment kann in eine Gewindespindel 266 eingeleitet werden, welche von der Mitte aus in eine Richtung mit Linksgewinde und in die andere Richtung mit einem entsprechenden Rechtsgewinde versehen sein kann. Die beiden y-Achs-Systeme mit angebauten z-Achs-Einheiten können sich somit voneinander entfernen oder sich einander annähern, wenn die Gewindespindel 266 mit Links-Rechts-Gewinde in rotatorische Bewegung versetzt wird. Auch hier kann ein Drehgeber vorgesehen sein, welcher die Überwachung der Entfernung der beiden y-Achs-Systeme mit den z-Achs-Einheiten am Ende der Links-Rechts-Spindel für die x-Achse übernimmt.

Der Haltekörper 220 kann einen Drehring 221 aufweisen, an welchem das gesamte beschriebene Bewegungssystem derart montiert sein kann, dass das gesamte Bewegungssystem um mindestens 350° drehbar ausgeführt ist. Für diese Bewegung kann ein weiterer Druckluftmotor 367 eingesetzt werden, der über eine Zahnradübersetzung seine Kraft auf den Drehring 221 übertragen kann.

Die Fig. 4 zeigt eine weitere perspektivische Ansicht des Reinigungskopfes 200. In dieser Ansicht ist nun auch der Haltearm 210 zu sehen, an welchem der Reinigungskopf 200 befestigt ist. Des Weiteren ist gezeigt, dass der Reinigungskopf 200 von einer ring- oder polygonförmigen Schutzwand 268 umgeben sein kann, die vorzugsweise aus Edelstahl gefertigt ist. In dieser Ansicht sind auch die Sprühdüsen 231 und 241 und die von ihnen emittierten Trockeneis-Pellets zu sehen. Die Druckluftmotoren sind in der Ansicht der Fig. 4 weggelassen.

Der Reinigungskopf 200 kann ferner mittels eines Drehgelenks 263 an dem Haltearm 210 angebracht sein, durch den der Reinigungskopf 200 um eine zentrale Achse des Drehgelenks 263 oder des Haltearms 210 drehbar ausgeführt sein kann, wobei vorzugsweise eine Drehbarkeit um 180° vorgesehen ist, welche sowohl im als auch gegen den Uhrzeigersinn erfolgen kann. Somit kann der Reinigungskopf 200 problemlos Vulkanisationsformen von oben oder von unten und auch unter schrägen Winkeln angenähert werden. Es kann ferner eine Klemmvorrichtung 264 vorgesehen sein, welche ein ungewolltes Verstellen des Reinigungskopfes 200 verhindert, wenn dieser aus seiner 0°-Stellung ausgelenkt ist. Die Verdrehbarkeit des Reinigungskopfes 200 kann unter anderem dazu verwendet werden, Bodenunebenheiten vor den Heizpressen problemlos und schnell auszugleichen.

Es kann ferner an dem Übergang zwischen dem Haltearm 210 und dem Reinigungskopf 200 eine Kippvorrichtung 262 angebracht sein, durch welche der Reinigungskopf 200 um eine durch die Kippvorrichtung 262 hindurchgehende Achse, welche zu der Achse des Drehgelenks 263 senkrecht ist, kippbar ist. Die Verkippung kann beispielsweise durch eine Trapezgewindespindel mit Handrad (nicht dargestellt) in einem Winkel von ca. 0° 30° verstellbar gelagert sein. An geeigneter Stelle des Reinigungskopfes 200 können überdies berührungslos arbeitende Sensoren (nicht dargestellt), wie etwa Ultraschalloder Laserstrahl-Sensoren, angebracht, sein, mit welchen über eine Abstandsbestimmtung der genaue Ort der Sprühdüsen 231 und 241 bestimmt werden kann. Das Messergebnis kann dann einer ebenfalls hier nicht dargestellten Überwachungseinrichtung zugeführt werden, in welcher durch einen Soll/Ist-Vergleich festgestellt wird, ob die Position von einer oder beiden Sprühdüsen korrigiert werden muss und gegebenenfalls entsprechende Steuersignale an einen oder mehrere der Antriebsmotoren ausgegeben werden müssen.

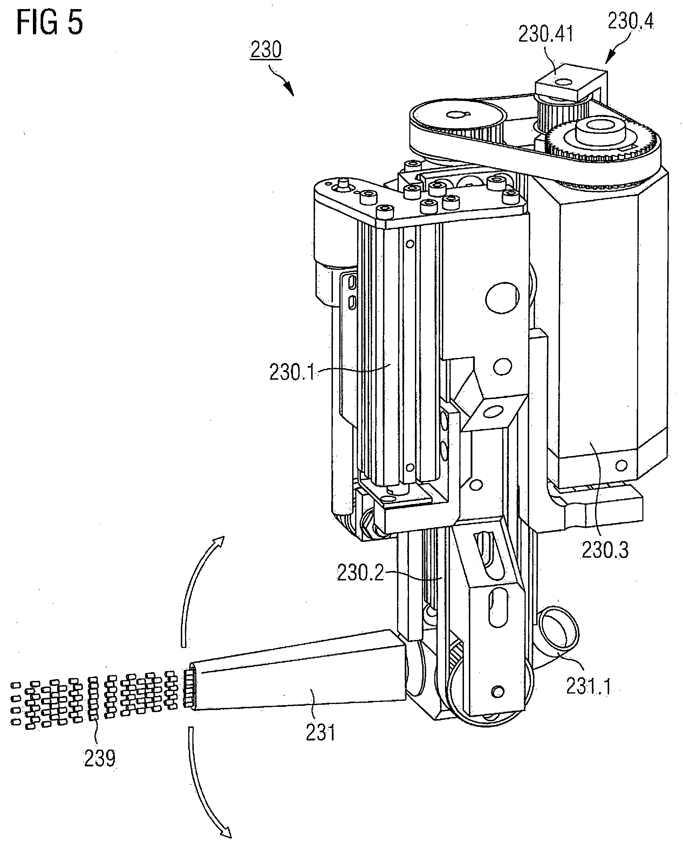

Die Fig. 5 zeigt eine perspektivische Ansicht einer Reinigungseinheit oder auch z-Achs-Einheit entsprechend den in den Figuren 3 und 4 dargestellten Reinigungseinheiten 230 und 240. Die in der Fig. 5 mit dem Bezugszeichen 230 bezeichnete Reinigungseinheit weist eine Sprühdüse 231 auf, welche am Ende einer teleskopisch in z-Richtung verfahrbaren Achse angebracht ist. Die Sprühdüse 231 kann am Ende dieser verfahrbaren Achse um ca. 270° drehbar angebracht sein, wie durch die Pfeile angedeutet ist. Die Drehung kann mittels eines Pneumatikzylinders 230.1 realisiert werden und die Kraft kann über einen Zahnriemen 230.2 auf die Achse der Sprühdüse 231 übertragen werden. Ein Wegaufnehmer kann eine Rückmeldung über die aktuelle Winkelstellung der Sprühdüse 231 ausgeben. Die Verstellung entlang der z-Richtung kann mittels eines Druckluftmotors 230.3 erfolgen. Der Druckluftmotor 230.3 kann sein Drehmoment über eine Zahnriemenübersetzung 230.4 auf eine Trapezspindel übertragen, wobei die Führung der Achse in z-Richtung durch eine Teleskopschiene erfolgen kann. Die Ausfahrtiefe kann durch einen Drehgeber 230.41 überwacht werden, welcher in der Zahnriemenübersetzung 230.4 enthalten ist.

Die Sprühdüse 231 ist mit einer Zuführung 231.1 verbunden, mit welcher Trockeneis-Pellets 239 zugeführt werden können, welche am Austrittsende der Sprühdüse 231 bei einem Reinigungsvorgang abgestrahlt werden können.

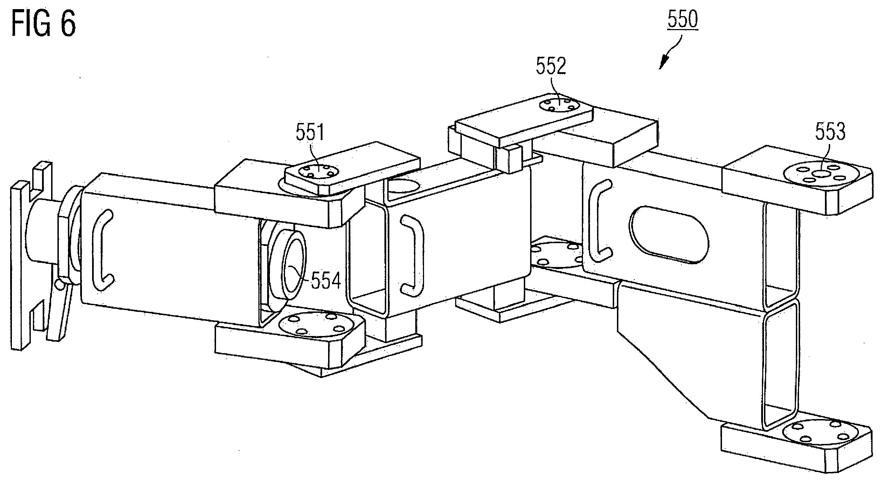

In der Fig. 6 ist eine perspektivische Ansicht eines Haltearms gemäß einer Ausführungsform dargestellt. Der Haltearm 550 kann demgemäß als ein dreigliedriger Gelenkarm oder auch sogenannter SCARA-Arm ausgestaltet sein. Ein derartiger Gelenkarm ermöglicht eine maximale Flexibilität beim Anfahren der zu reinigenden Vulkanisationsform. An dem äußeren, rechten Ende der in Fig. 6 dargestellten Ausführungsform des Gelenkarms 550 wird dieser mit einem Reinigungswagen verbunden, während er mit dem äußeren, linken Ende - wie bereits in Fig.4 zu sehen war - mit dem Reinigungskopf verbunden wird. Der Gelenkarm 550 weist drei Gelenke 551, 552 und 553 auf, welche es möglich machen, dass sich der Schwerpunkt des Reinigungskopfes in einem günstigen Bereich bewegt, während der Reinigungskopf an die zu reinigende Vulkanisationsform angenähert wird. Der Reinigungskopf kann dabei in relativer Nähe zu dem verwendeten Reinigungswagen vorbei bewegt werden, so dass nur geringe seitliche Kippmomente auftreten. Die Elemente des Gelenkarms können Durchführungen 554 aufweisen, durch die Schläuche und/oder elektrische Leitungen von dem Reinigungswagen zu dem Reinigungskopf geführt werden können.

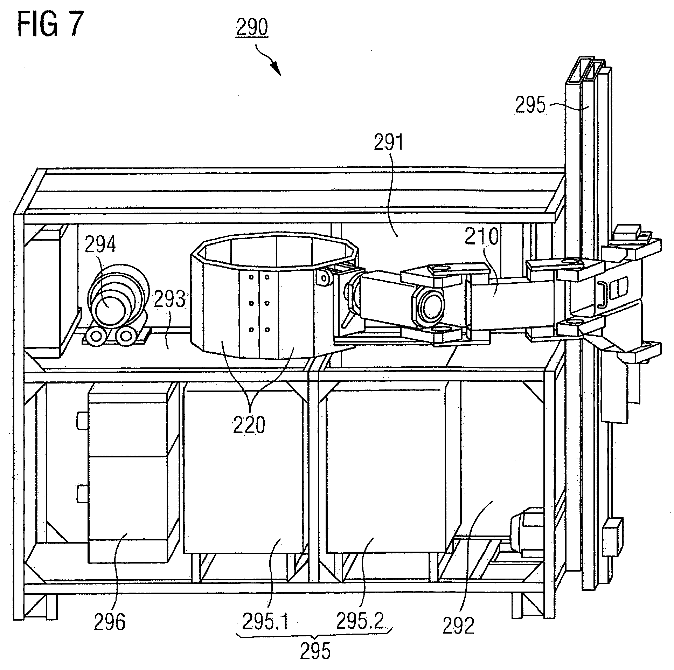

In der Fig. 7 ist eine perspektivische Ansicht eines Reinigungswagens einer Reinigungsvorrichtung gemäß einer Ausführungsform dargestellt. Der Reinigungswagen 290 weist einen ersten Bereich 291 und einen zweiten Bereich 292 auf, welche durch eine horizontale Zwischenwand 293 voneinander getrennt sein können. Der erste Bereich 291 ist dafür vorgesehen, dass ein an dem Reinigungswagen 290 angebrachter Haltearm 210 mit samt daran befestigtem Reinigungskopf 220 in den ersten Bereich 291 eingeschwenkt und darin arretiert werden kann. Der zweite Bereich 292 ist dafür vorgesehen, eine Trockeneis-Strahlanlage 295 aufzunehmen, welche vorliegend zwei Trockeneisbehälter 295.1 und 295.2 enthält, welche über entsprechende Schlauchzuführungen mit den Sprühdüsen verbindbar bzw. verbunden sind. In dem ersten Bereich 291 kann außerdem ein Gebläse 294 für die Absaugung der Trockeneis-Pellets aus den Trockeneisbehältern 295.1 und 295.2 aufbewahrt sein. In dem zweiten Bereich 292 kann auch ein Schaltschrank 296 für die Bereitstellung der Stromversorgung für die Schrittmotoren und für angeordnet sein. Insbesondere die Einheiten 294 und 296 können auch vertauscht angeordnet werden. Der Haltearm 210 kann an einer vertikalen Schiene 295 vertikal verschiebbar angebracht sein.

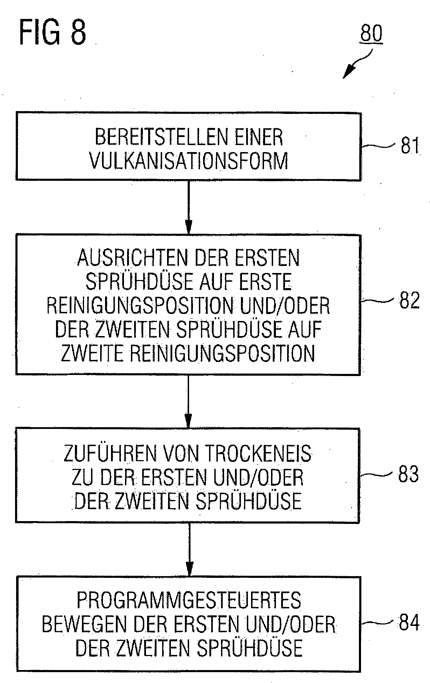

In der Fig. 8 ist ein Flussdiagramm eines Verfahrens zum Reinigen von Vulkanisationsformen für Reifen mittels Trockeneis mittels einer wie vorstehend beschriebenen Vorrichtung gemäß dem dritten Aspekt dargestellt. Das Verfahren 80 gemäß Fig. 8 umfasst die Schritte: Bereitstellen einer Vulkanisationsform (81), Ausrichten der ersten Sprühdüse auf eine erste Reinigungsposition und/oder der zweiten Sprühdüse auf eine zweite Reinigungsposition (82), Zuführen von Trokkeneis zu der ersten und/oder der zweiten Sprühdüsen (83), und programmgesteuertes Bewegen der ersten Sprühdüse und/oder der zweiten Sprühdüse derart, dass ein vorgegebener Bereich einer Innenwand der Vulkanisationsform durch einen oder zwei Trokkeneis-Strahlen gereinigt wird (84).

Gemäß einer Ausführungsform des Verfahrens wird die Vulkanisationsform in einem Zustand bereitgestellt, in welchem sie in eine Heizpresse eingebaut ist. Dabei kann vorzugsweise die Temperatur der Vulkanisationsform auf einen Wert von mehr als 50°C oder mehr als 100°C eingestellt werden. Auf diese Weise kann der Reinigungsvorgang thermisch unterstützt werden.

Gemäß einer Ausführungsform des Verfahrens wird die Vulkanisationsform in einem Zustand bereitgestellt, in welchem sie aus der Heizpresse ausgebaut ist.

Gemäß einer Ausführungsform des Verfahrens wird die Vulkanisationsform in einem Zustand bereitgestellt, in welchem sie in eine Heizpresse eingebaut ist.

Gemäß einer Ausführungsform des Verfahrens wird die erste und/oder die zweite Düse während des Reinigungsverfahrens entlang aller drei Richtungen des x-y-z-Koordinatensystems bewegt, um jeden gewünschten Bereich von einer optimalen Reinigungsposition aus anvisieren zu können.

Mit den in den vorstehenden Ausführungsformen beschriebenen Drehgebern und Wegaufnehmern und/oder berührungslos messenden Sensoren ist es möglich die Position und/oder die Ausrichtung der ersten und der zweiten Sprühdüse zu überwachen. Zusätzlich kann die Position und/oder Ausrichtung der ersten und der zweiten Sprühdüse aufgrund vorgegebener Sollwerte geregelt werden.

Mit dem vorstehend beschriebenen Verfahren kann beispielsweise ein Teilbereich der Innenwand einer Vulkanisationsform, insbesondere ein ein Ventil oder einen schwer zugänglichen Bereich aufweisender Teilbereich, gereinigt werden.

Obwohl spezifische Ausführungsformen hierin dargestellt und beschrieben wurden, ist für den Fachmann auf dem Gebiet zu erkennen, dass die gezeigten und beschriebenen spezifischen Ausführungsformen gegen eine Vielfalt von alternativen und/oder äquivalenten Implementierungen ausgetauscht werden können, ohne vom Schutzbereich der vorliegenden Erfindung abzuweichen. Diese Anmeldung soll jegliche Anpassungen oder Veränderungen der hierin erörterten spezifischen Ausführungsformen abdecken. Daher ist vorgesehen, dass diese Erfindung nur durch die Ansprüche und deren Äquivalente begrenzt ist.

## Patentansprüche

1. Vorrichtung zum Reinigen von Vulkanisationsformen für Reifen mittels Trockeneis, mit:
einem Haltearm (10; 210);
einem Haltekörper (20; 220), welcher mit dem Haltearm (10; 210) verbunden ist;
einer ersten Reinigungseinheit (30; 230), welche mit dem Haltekörper (20; 220) verbunden ist;
einer ersten Sprühdüse (31; 231), welche mit der ersten Reinigungseinheit (30; 230) verbunden ist;
einer zweiten Reinigungseinheit (40; 240), welche mit dem Haltekörper (20; 220) verbunden ist; und
einer zweiten Sprühdüse (41; 241), welche mit der zweiten Reinigungseinheit (40; 240) verbunden ist,
**gekennzeichnet durch**
eine erste Schiene (245), an welcher die erste Reinigungseinheit (30; 230) linear bewegbar entlang der ersten Schiene (245) angebracht ist, und
eine zweite Schiene (250), an welcher die zweite Reinigungseinheit (40; 240) linear bewegbar entlang der zweiten Schiene (250) angebracht ist, wobei
die erste Schiene (245) und die zweite Schiene (250) sich jeweils entlang einer x-Achse eines **durch** den Haltekörper (220; 220) definierten x-y-z-Koordinatensystem erstrecken.

2. Vorrichtung nach Anspruch 1, ferner mit:
einer dritten Schiene (255) und einer dazu parallelen vierten Schiene (260), wobei die erste Schiene (245) und die zweite Schiene (250) jeweils derart an der dritten (255) und der vierten Schiene (260) angebracht sind, dass sie entlang der Richtung der dritten (255) und vierten Schiene (260) linear bewegbar sind, wobei die dritte Schiene (255) und die vierte Schiene (260) sich jeweils entlang einer y-Achse des x-y-z-Koordinatensystems erstrecken und ortsfest an dem Haltekörper (20; 220) angebracht sind.

3. Vorrichtung nach einem der Ansprüche 1 bis 2, bei welcher die erste Reinigungseinheit (30; 230) und die zweite Reinigungseinheit (40; 240) derart mit dem Haltekörper (20; 220) verbunden sind, dass sie eine koordinierte Drehbewegung um eine Hauptachse des Haltekörpers (20; 220) ausführen, wobei insbesondere
die koordinierte Drehbewegung in einer x-y-Ebene eines durch den Haltekörper (20; 220) definierten x-y-z-Koordinatensystems stattfindet.

4. Vorrichtung nach Anspruch 3, bei welcher
der Haltekörper (20; 220) einen Ring enthält und die durch den Ring definierte Ebene die x-y-Ebene des x-y-z-Koordinatensystems bildet.

5. Vorrichtung nach einem der Ansprüche 1 bis 4, bei welcher die erste Sprühdüse (31; 231) an der ersten Reinigungseinheit (30; 230) verschwenkbar angebracht ist, und
die zweite Sprühdüse (41; 241) an der zweiten Reinigungseinheit (40; 240) verschwenkbar angebracht ist, wobei insbesondere die Verschwenkbarkeit jeder der beiden Sprühdüsen (31, 41; 231, 241) um eine zur Achse der Sprühdüse senkrechte Achse erfolgt.

## Claims

1. Device for cleaning vulcanization moulds for tyres by means of dry ice, with:
a holding arm (10; 210);
a holding body (20; 220), which is connected to the holding arm (10; 210) ;
a first cleaning unit (30; 230), which is connected to the holding body (20; 220);
a first spray nozzle (31; 231), which is connected to the first cleaning unit (30; 230);
a second cleaning unit (40; 240), which is connected to the holding body (20; 220); and
a second spray nozzle (41; 241), which is connected to the second cleaning unit (40; 240),
**characterized by**
a first rail (245), to which the first cleaning unit (30; 230) is attached linearly movably along the first rail (295), and
a second rail (250), to which the second cleaning unit (40; 240) is attached linearly movably along the second rail (250), wherein
the first rail (245) and the second rail (250) respectively extend along an x axis of a system of x-y-z coordinates defined by the holding body (220; 220).

2. Device according to Claim 1, also with:
a third rail (255) and a fourth rail (260) arranged parallel thereto, wherein the first rail (245) and the second rail (250) are respectively attached to the third rail (255) and to the fourth rail (260) in such a way that they are linearly movable along the direction of the third rail (255) and the fourth rail (260), wherein the third rail (255) and the fourth rail (260) respectively extend along a y axis of the system of x-y-z coordinates and are fixedly attached to the holding body (20; 220).

3. Device according to either of Claims 1 and 2, in which the first cleaning unit (30; 230) and the second cleaning unit (40; 240) are connected to the holding body (20; 220) in such a way that they perform a coordinated rotating movement about a main axis of the holding body (20; 220), wherein in particular
the coordinated rotating movement takes place in an x-y plane of a system of x-y-z coordinates defined by the holding body (20; 220).

4. Device according to Claim 3, in which the holding body (20; 220) includes a ring and the plane defined by the ring forms the x-y plane of the system of x-y-z coordinates.

5. Device according to one of Claims 1 to 4, in which the first spray nozzle (31; 231) is pivotably attached to the first cleaning unit (30; 230), and
the second spray nozzle (41; 241) is pivotably attached to the second cleaning unit (40; 240), wherein in particular the pivotability of each of the two spray nozzles (31, 41; 231, 241) takes place about an axis perpendicular to the axis of the spray nozzle.

## Revendications

1. Dispositif destiné au nettoyage de moules de vulcanisation pour des pneus, au moyen de glace carbonique, comprenant:
un bras de fixation (10; 210);
un corps de fixation (20; 220) qui est connecté au bras de fixation (10; 210);
une première unité de nettoyage (30; 230) qui est connectée au corps de fixation (20; 220);
une première buse de pulvérisation (31; 231), qui est connectée à la première unité de nettoyage (30 ; 230);
une deuxième unité de nettoyage (40 ; 240) qui est connectée au corps de fixation (20 ; 220); et
une deuxième buse de pulvérisation (41 ; 241), qui est connectée à la deuxième unité de nettoyage (40; 240),
**caractérisé par**
un premier rail (245), au niveau duquel la première unité de nettoyage (30; 230) est montée de manière déplaçable linéairement le long du premier rail (245), et
un deuxième rail (250), au niveau duquel la deuxième unité de nettoyage (40; 240) est montée de manière déplaçable linéairement le long du deuxième rail (250), le premier rail (245) et le deuxième rail (250) s'étendant à chaque fois le long d'un axe x d'un système de coordonnées x-y-z défini par le corps de fixation (220; 220).

2. Dispositif selon la revendication 1, comprenant en outre:
un troisième rail (255) et un quatrième rail (260) parallèle à celui-ci, le premier rail (245) et le deuxième rail (250) étant montés à chaque fois sur le troisième (255) et le quatrième (260) rail de telle sorte qu'ils puissent être déplacés linéairement le long de la direction du troisième (255) et du quatrième (260) rail, le troisième rail (255) et le quatrième rail (260) s'étendant à chaque fois le long d'un axe y du système de coordonnées x-y-z et étant montés fixement sur le corps de fixation (20 ; 220).

3. Dispositif selon l'une quelconque des revendications 1 et 2, dans lequel la première unité de nettoyage (30; 230) et la deuxième unité de nettoyage (40 ; 240) sont connectées au corps de fixation (20; 220) de telle sorte qu'elles effectuent un mouvement de rotation coordonné autour d'un axe principal du corps de fixation (20; 220), le mouvement de rotation coordonné étant effectué notamment dans un plan x-y d'un système de coordonnées x-y-z défini par le corps de fixation (20; 220).

4. Dispositif selon la revendication 3, dans lequel le corps de fixation (20 ; 220) contient une bague et le plan défini par la bague formant le plan x-y du système de coordonnées x-y-z.

5. Dispositif selon l'une quelconque des revendications 1 à 4, dans lequel la première buse de pulvérisation (31; 231) est montée de manière à pouvoir pivoter sur la première unité de nettoyage (30; 230), et
la deuxième buse de pulvérisation (41; 241) est montée de manière à pouvoir pivoter sur la deuxième unité de nettoyage (40; 240), le pivotement de chacune des deux buses de pulvérisation (31, 41; 231, 241) se produisant notamment autour d'un axe perpendiculaire à l'axe de la buse de pulvérisation.
